(19) **Europäisches Patentamt / European Patent Office / Office européen des brevets**

(11) **EP 2 160 664 B1**

(12) **FASCICULE DE BREVET EUROPEEN**

(45) Date de publication et mention
de la délivrance du brevet:
**28.09.2011 Bulletin 2011/39**

(21) Numéro de dépôt: **08826456.9**

(22) Date de dépôt: **16.06.2008**

(51) Int Cl.:
***G06K 9/62*** *(2006.01)*

(86) Numéro de dépôt international:
**PCT/FR2008/000831**

(87) Numéro de publication internationale:
**WO 2009/010651 (22.01.2009 Gazette 2009/04)**

(54) **PROCÉDÉ ET DISPOSITIF POUR DÉTERMINER UNE POSITION CONSOLIDÉE D'UN MOBILE, EN PARTICULIER D'UN AÉRONEF**

VERFAHREN UND EINRICHTUNG ZUR BESTIMMUNG EINER KONSOLIDIERTEN POSITION EINES SICH BEWEGENDEN OBJEKTS, INSBESONDERE EINES FLUGZEUGS

METHOD AND DEVICE FOR DETERMINING A CONSOLIDATED POSITION OF A TRAVELLING OBJECT, PARTICULARLY AN AIRCRAFT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **25.06.2007 FR 0704529**

(43) Date de publication de la demande:
**10.03.2010 Bulletin 2010/10**

(73) Titulaire: **AIRBUS OPERATIONS (SAS)**
**31060 Toulouse (FR)**

(72) Inventeurs:
• **GUILLET, Alain**
**F-31700 Blagnac (FR)**
• **CHAGGARA, Ridha**
**F-31200 Toulouse (FR)**

(74) Mandataire: **Bloch & Bonnétat**
**23bis, rue de Turin**
**75008 Paris (FR)**

(56) Documents cités:
**US-A- 5 906 655          US-A- 6 092 033**
**US-A1- 2003 023 534     US-A1- 2005 125 141**
**US-B1- 6 502 042**

**Description**

La présente invention concerne un procédé et un dispositif pour déterminer une position consolidée d'un mobile, en particulier d'un aéronef, notamment d'un avion de transport.

Plus précisément, dans le cadre de la présente invention, la position consolidée représente une position précise et fiable qui est déterminée à partir d'une pluralité de valeurs de position qui représentent chacune une même position courante du mobile et qui sont engendrées par différents moyens de génération de position, embarqués sur le mobile.

On sait que sur un avion commercial, la position de l'avion est généralement calculée à partir de plusieurs types de systèmes de positionnement (ou moyens de génération de position), en particulier un système de référence inertielle de type IR ("Inertial Reference" en anglais), un système de référence de données air de type ADR ("Air Data Reference" en anglais), et des moyens GNSS qui font partie d'un système de positionnement par satellites de type GNSS ("Global Navigation Satellite System" en anglais). Ces moyens GNSS possèdent généralement un algorithme de surveillance d'intégrité de type RAIM ("Receiver Autonomous Integrity Monitoring" en anglais) qui permet grâce à la redondance de satellites de déterminer l'intégrité d'une position calculée. De plus, les systèmes IR et ADR et les moyens GNSS sont habituellement hybridés dans le système IR, et ce système IR comporte en général un algorithme de type AAIM ("Aircraft Autonomous Integrity Monitoring" en anglais) qui permet, grâce aux caractéristiques différentes et complémentaires de ces trois ensembles IR, ADR et GNSS, de déterminer l'intégrité d'une position calculée de l'avion. Ces algorithmes RAIM et AAIM permettent de détecter et d'exclure en temps réel des erreurs ou des pannes d'un satellite faisant partie du système GNSS.

Toutefois, ces algorithmes RAIM et AAIM ne permettent pas de détecter (et d'exclure) des erreurs ou des pannes des systèmes embarqués sur l'avion, c'est-à-dire le système IR, le système ADR ou un récepteur usuel associé au système GNSS. Or, de telles erreurs ou pannes peuvent provoquer le calcul d'une position erronée de l'avion.

Par ailleurs, on connaît :

- par le document US-6 502 042, un système de mesure comprenant une pluralité de capteurs pour mesurer des paramètres d'un liquide d'un conteneur, en particulier- d'un réservoir d'avion, ainsi que des moyens de: traitement des mesures ainsi réalisées :
- par le document US-5 906 655, une méthode pour surveiller l'intégrité d'un système de positionnement intégré, qui est monté sur un mobile ;
- par le document US-2005/125141, un système de navigation intégré, qui utilise une pluralité de capteurs radiofréquence ; et
- par le système US-20031023534, un procédé et un dispositif pour déterminer des informations provenant d'une pluralité des sources, qui présentent un certain niveau de précision.

La présente invention a pour objet de remédier aux inconvénients précités. Plus particulièrement, elle a pour objet de détecter et d'exclure des erreurs ou des pannes de moyens de génération de position, embarqués dans un mobile, par exemple de systèmes IR et ADR et/ou d'un récepteur GNSS embarqués dans un aéronef. La présente invention a également pour but de calculer une position très précise et intègre du mobile, et elle doit notamment pouvoir être mise en oeuvre en complément des algorithmes RAIM et AAIM précités.

La présente invention concerne donc un procédé pour déterminer une position (courante) consolidée, particulièrement précise, intègre et fiable, d'un mobile, en particulier d'un aéronef, et ceci à partir d'une pluralité de valeurs de position qui sont générées par une pluralité de moyens de génération de position pour la position courante dudit mobile.

A cet effet, selon l'invention, ledit procédé est remarquable en ce que :

a) on réalise des tests de cohérence pour vérifier la cohérence de tous les couples de valeurs de position, qui sont formés à partir desdites valeurs de position prises en compte, un test de cohérence appliqué à un couple de valeurs de position consistant :

- à calculer la distance entre les deux valeurs de position de ce couple ;
- à comparer cette distance: à une valeur de seuil ; et
- à considérer ce couple comme cohérent si et seulement si cette distance est inférieure ou égale à cette valeur de seuil ;

b) on identifie, parmi les différents couples qui sont considérés comme cohérents à l'étape a), un couple de valeurs de position présentant la meilleure fiabilité, en mettant en oeuvre au moins un test de performance ; et
c) on calcule, à partir dudit couple de valeurs de position présentant la meilleure fiabilité, ladite position consolidée du mobile, ainsi qu'un espace de probabilité qui est associé à cette valeur de position consolidée et qui illustre son intégrité.

Ainsi, grâce à l'invention, on met en oeuvre un procédé de consolidation qui permet de déterminer une position consolidée du mobile (en particulier d'un aéronef), qui représente une position (courante) particulièrement précise, fiable et intègre de ce dernier. Ceci permet de remédier aux inconvénients précités.

De plus, ce procédé (de consolidation) conforme à l'invention permet également de déterminer un espace de probabilité qui est associé à la position consolidée calculée et qui illustre son intégrité. Plus précisément, dans le cadre de la présente invention, un espace de probabilité qui est associé à une position quelconque (valeur de position ou position consolidée) d'un mobile, est centré autour de cette position et définit le volume dans lequel est située, à une probabilité supérieure à un seuil prédéterminé (par exemple $10^{-7}$/heure de vol ou $10^{-9}$/heure de vol), la position effective du mobile.

En outre, pour mettre en oeuvre le procédé conforme à l'invention il n'est pas nécessaire de beaucoup modifier, structurellement et électriquement, les systèmes (notamment les calculateurs) existants. De plus, la mise en oeuvre dudit procédé n'a aucune répercussion sur les systèmes utilisateurs, qui ne doivent donc pas être modifiés lorsqu'ils utilisent la position consolidée déterminée à l'aide du procédé conforme à l'invention.

Bien que non exclusivement, la présente invention s'applique plus particulièrement à un aéronef, et en particulier à un avion de transport. Dans une telle application, les valeurs de position prises en compte, notamment à l'étape a) du procédé conforme à l'invention, peuvent concerner des valeurs de position qui ont été engendrées par différents systèmes et notamment par au moins l'un des ensembles IR, ADR et GNSS précités. Dans une telle application, le procédé conforme à l'invention :

- permet de détecter et d'exclure en temps réel des erreurs ou des pannes des systèmes embarqués dans l'aéronef, c'est-à-dire un système IR, un système ADR et/ou un récepteur GNSS ; et
- ne dégrade pas les algorithmes RAIM et/ou AAIM précités qui permettent de détecter et d'exclure en temps réel des erreurs ou des pannes d'un satellite d'un système GNSS.

Le procédé conforme à l'invention peut être mis en oeuvre quel que soit le nombre de valeurs de position disponibles en entrée, à partir du moment où on dispose d'au moins deux valeurs de position différentes.

De préférence, ledit procédé de consolidation conforme à l'invention est mis en oeuvre dans au moins deux calculateurs différents, ce qui permet de protéger cette mise en oeuvre contre une éventuelle défaillance d'un desdits calculateurs.

Dans un mode de réalisation préféré, la valeur de seuil utilisée à l'étape a) dans un test de cohérence appliqué à deux valeurs de position est calculée à partir des rayons de deux espaces de probabilité qui sont associés respectivement à ces deux valeurs de position testées et qui illustrent les intégrités respectives de ces deux valeurs de position. De préférence, ladite valeur de seuil correspond à l'une des valeurs suivantes :

- la valeur minimale desdits deux rayons ; ou
- la valeur maximale desdits deux rayons ; ou
- la somme desdits deux rayons.

On notera que le choix de la valeur de seuil joue un rôle important dans les performances du procédé de consolidation conforme à l'invention. En effet, le choix d'une valeur de seuil trop petite peut conduire à l'élimination d'une valeur de position correcte, tandis que le choix d'une valeur de seuil trop grande peut conduire au maintien d'une valeur de position erronée.

En outre, à l'étape b), ledit test de performance consiste, avantageusement :

- à calculer, pour chaque couple de valeurs de position Pi et Pj considéré, une valeur mathématique associée, et ceci à partir de l'expression |Pi-Pj| + |HPLi - HPLj|, dans laquelle HPLi et HPLj sont les rayons d'espaces de probabilité qui sont associés respectivement aux deux valeurs de position Pi et Pj testées et qui illustrent les intégrités respectives de ces deux valeurs de position Pi et Pj ;
- à comparer, entre elles, les différentes valeurs mathématiques ainsi calculées ; et
- à sélectionner, comme couple de valeurs de position présentant la meilleure fiabilité, le couple dont la valeur mathématique associée (issue de l'expression précitée) est la plus faible.

Par ailleurs, avantageusement, à l'étape c), on calcule ladite position consolidée, ainsi que l'espace de probabilité associé, à partir à la fois :

- des deux valeurs de position formant le couple présentant la meilleure fiabilité ; et
- des espaces de probabilité associés respectivement à ces deux valeurs de position.

Dans le cadre de la présente invention, ces calculs de la position consolidée Pc et de l'espace de probabilité HPLc associé peuvent être réalisés de différentes manières, à partir des valeurs Pi et Pj du couple présentant la meilleure fiabilité, qui comprennent des espaces de probabilité de rayons HPLi et HPLj. En particulier, la position consolidée Pc et le rayon HPLc de l'espace de probabilité associé peuvent vérifier l'une des relations suivantes :

-   dans un mode de réalisation préféré :

$$\begin{cases} Pc = (Pi + Pj) / 2 \\ HPLc = \max(HPLi,\ HPLj) + |Pi - Pj| / 2 \end{cases}$$

-   dans une première variante illustrant une optimisation de l'intégrité de la position consolidée :

•

$$si\ |HPLi - HPLj| < |Pi - Pj|\ :$$

$$\begin{cases} Pc = \left[(Pi + Pj) + (HPLi - HPLj).(\overrightarrow{PjPi} / PiPj)\right] / 2 \\ HPLc = (HPLi + HPLj + |Pi - Pj|) / 2 \end{cases}$$

•

$$si\ |HPLi - HPLj| \geq |Pi - Pj|\ :$$

$$\begin{cases} Pc\ \text{correspond à la position Pi ou Pj qui présente le rayon HPLi ou HPLj} \\ \text{le plus élevé}\ [\max(HPLi,\ HPLj)] \\ HPLc = \max(HPLi, HPLj) \end{cases}$$

-   dans une seconde variante illustrant une optimisation de la position consolidée :

•

$$si\ |HPLi - HPLj| < |Pi - Pj|\ :$$

$$\begin{cases} Pc = \left[(Pi + Pj) + (HPLi - HPLj).(\overrightarrow{PiPj} / PiPj)\right] / 2 \\ HPLc = \max(HPLi, HPLj) + (|HPLi - HPLj| + |Pi - Pj|) / 2 \end{cases}$$

•

$$si\ |HPLi - HPLj| \geq |Pi - Pj|\ :$$

$$\begin{cases} Pc\ \text{correspond à la position Pi ou Pj qui présente le rayon HPLi ou HPLj} \\ \text{le plus faible}\ [\min(HPLi, HPLj)] \\ HPLc = \max(HPLi, HPLj) + |Pi - Pj| \end{cases}$$

On notera que, dans le cadre de la présente invention, les valeurs de position peuvent être indépendantes les unes des autres, c'est-à-dire ne pas présenter de mode commun de panne ... Toutefois, certaines de ces valeurs de position peuvent également être dépendantes l'une de l'autre et présenter un certain niveau de dépendance, c'est-à-dire avoir un élément matériel commun, tel qu'une antenne par exemple, qui peut être une source de panne commune.

4

De façon avantageuse, lorsque les valeurs de position prises en compte sont indépendantes les unes des autres, on réalise, à l'étape b), un test de performance de type précité, en tenant compte de tous les couples cohérents de valeurs de position indépendantes.

En outre, lorsqu'au moins certaines desdites valeurs de position sont dépendantes les unes des autres, on réalise, à l'étape b), un test de performance de type précité, mais en privilégiant les couples cohérents de valeurs de position indépendantes.

Dans un mode de réalisation préféré, on met en oeuvre, entre les étapes a) et b), une étape intermédiaire dans laquelle :

- on réalise des tests de correspondance consistant à comparer entre elles, deux à deux, toutes les valeurs de position qui dépendent l'une de l'autre, en calculant la différence entre ces valeurs de position et en comparant cette différence à un seuil ; et
- on considère qu'un couple de valeurs de position dépendantes ne présente aucune incohérence et est dit "en accord", si la différence entre ces valeurs de position est inférieure audit seuil.

Dans ce cas, de préférence, à l'étape b), on prend en compte tous les couples de valeurs de position qui sont considérés comme cohérents à l'étape a), et si parmi ces couples :

- il existe au moins deux couples de valeurs de position indépendantes, on réalise, à l'aide de ces (au moins deux) couples, un test de performance de type précité de manière à obtenir le couple présentant la meilleure fiabilité ;
- il existe un seul couple de valeurs de position indépendantes, on considère ce couple comme le couple présentant la meilleure fiabilité ; et
- il n'existe aucun couple de valeurs de position indépendantes, mais il existe des couples de valeurs de position dépendantes, on considère tous ces couples de valeurs de position dépendantes.

Dans ce cas, deux modes de réalisation sont possibles, suivant que l'étape intermédiaire entre les étapes a) et b) (les tests de correspondance), décrite précédemment, existe ou non.

Si l'étape intermédiaire entre a) et b) existe, et si parmi les couples de valeurs de position dépendantes :

- il existe au moins deux couples (de valeurs de position dépendantes) en accord, on réalise, à l'aide de ces (au moins deux) couples, un test de performance de type précité de manière à obtenir le couple présentant la meilleure fiabilité ;
- il existe un seul couple (de valeurs de position dépendantes) en accord, on considère ce couple comme le couple présentant la meilleure fiabilité ; et
- il n'existe aucun couple de valeurs de position dépendantes en accord, on n'obtient pas de couple présentant la meilleure fiabilité.

En revanche, si l'étape intermédiaire entre a) et b) n'existe pas, on n'obtient pas de couple présentant la meilleure fiabilité.

La présente invention concerne également un dispositif pour déterminer une position consolidée d'un mobile, en particulier d'un aéronef, et notamment d'un avion de transport, à partir d'une pluralité de valeurs de position générées par une pluralité de moyens de génération de position pour la position courante dudit mobile.

Selon l'invention, ledit dispositif est remarquable en ce qu'il comporte :

- des premiers moyens pour réaliser des tests de cohérence destinés à vérifier la cohérence de tous les couples de valeurs de position, qui sont formés à partir desdites valeurs de position prises en compte, un test de cohérence réalisé par lesdits premiers moyens et appliqué à un couple de valeurs de position consistant à comparer à une valeur de seuil la distance entre les deux valeurs de position de ce couple et à considérer ce couple comme cohérent si et seulement si cette distance est inférieure ou égale à cette valeur de seuil ;
- des deuxièmes moyens pour identifier, parmi les différents couples qui sont considérés comme cohérents par lesdits premiers moyens, un couple de valeurs de position présentant la meilleure fiabilité, en mettant en oeuvre au moins un test de performance ; et
- des troisièmes moyens pour calculer, à partir dudit couple de valeurs de position présentant la meilleure fiabilité, ladite position consolidée du mobile, ainsi qu'un espace de probabilité qui est associé à cette valeur de position consolidée et qui illustre son intégrité.

La présente invention concerne également un système de génération d'une position consolidée d'un mobile, en particulier d'un aéronef.

Selon l'invention, ledit système de génération comporte :

- une pluralité de moyens de génération de position (par exemple un système IR, un système ADR et/ou des moyens GNSS de type précité dans le cas d'un aéronef) qui sont susceptibles d'engendrer des valeurs de position, dont chacune représente la position courante dudit mobile ; et
- un dispositif tel que celui précité, pour déterminer une position consolidée à partir des valeurs de position engendrées par lesdits moyens de génération de position.

Par ailleurs, la présente invention concerne, de plus, un mobile, notamment un aéronef, qui est muni d'un dispositif tel que celui précité ou d'un système de génération tel que celui précité.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2A, 2B, 3A, 3B, 4A et 4B sont des schémas qui permettent de bien expliquer les caractéristiques d'un test de cohérence conforme à l'invention.

La figure 5 est le schéma synoptique d'un mode de réalisation particulier d'un dispositif conforme à l'invention.

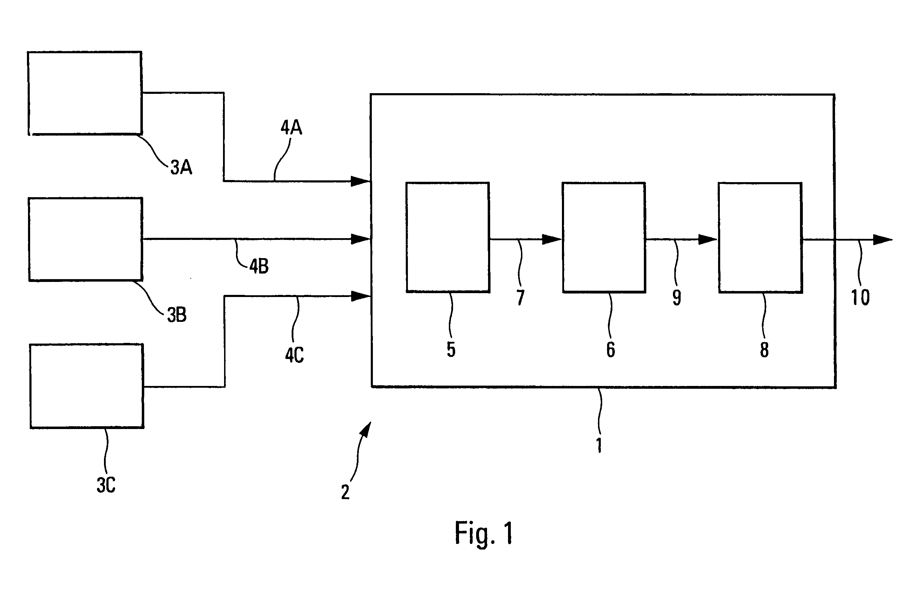

Le dispositif 1 conforme à l'invention et représenté schématiquement sur la figure 1 est embarqué sur un mobile (non représenté), en particulier un aéronef et notamment un avion de transport, et est destiné à déterminer en temps réel une position courante consolidée Pc de ce mobile.

A cet effet, ce dispositif 1 fait partie d'un système 2 de génération d'une position consolidée du mobile, qui comporte, en plus dudit dispositif 1, comme représenté sur la figure 1, une pluralité de moyens de génération de position 3A, 3B, 3C, précisés ci-dessous. Ces moyens de génération 3A, 3B, 3C sont susceptibles d'engendrer en temps réel des valeurs de position, chaque valeur de position représentant la position courante dudit mobile, ainsi que des espaces de probabilité associés (précisés ci-dessous), et ils sont susceptibles de transmettre ces informations respectivement par l'intermédiaire de liaisons 4A, 4B et 4C audit dispositif 1. Le dispositif 1 détermine la position courante consolidée Pc du mobile, à partir des valeurs de position reçues desdits moyens de génération de position 3A à 3C.

A cet effet, ledit dispositif 1 comporte, selon l'invention :

- des moyens 5 pour réaliser des tests de cohérence destinés à vérifier la cohérence de tous les couples de valeurs de position, qui sont formés à partir des différentes valeurs de position qui sont engendrées et transmises par lesdits moyens 3A à 3C (pour une même position effective du mobile). Un test de cohérence qui est réalisé par lesdits moyens 5 sur un couple quelconque de valeurs de position P1 et P2 consiste à comparer, à une valeur de seuil VS précisée ci-dessous, la distance P1 P2 entre les deux valeurs de position P1 et P2 de ce couple et à considérer ce couple comme cohérent si et seulement si cette distance P1 P2 est inférieure ou égale à cette valeur de seuil VS ;
- des moyens 6 qui sont reliés par l'intermédiaire d'une liaison 7 auxdits moyens 5 et qui sont formés de manière à identifier, parmi les différents couples qui sont considérés comme cohérents par lesdits moyens 5, le couple de valeurs de position qui présente la meilleure fiabilité, en mettant en oeuvre au moins un test de performance précisé ci-dessous ; et
- des moyens 8 qui sont reliés par l'intermédiaire d'une liaison 9 auxdits moyens 6 et qui sont formés pour calculer, à partir dudit couple de valeurs de position présentant la meilleure fiabilité (qui est reçu desdits moyens 6), ladite position consolidée Pc du mobile, ainsi qu'un espace de probabilité qui est associé à cette valeur de position consolidée Pc et qui illustre son intégrité.

Le dispositif 1 est susceptible de transmettre la position consolidée Pc et l'espace de probabilité associé, calculés par lesdits moyens 8, à des dispositifs utilisateurs (non représentés) du mobile, par l'intermédiaire d'une liaison 10. Ces systèmes utilisateurs peuvent être tous les systèmes embarqués sur le mobile, notamment des calculateurs et des systèmes d'affichage, qui utilisent une valeur de la position courante du mobile.

Ainsi, le dispositif 1 conforme à l'invention permet de déterminer une position consolidée Pc d'un mobile et notamment d'un aéronef, qui représente une position (courante) particulièrement précise, fiable et intègre de ce dernier.

De plus, ledit dispositif 1 permet également de déterminer un espace de probabilité qui est associé à la position consolidée Pc calculée et qui illustre son intégrité. Plus précisément, dans le cadre de la présente invention, un espace de probabilité, qui est associé à une position quelconque (valeur de position ou position consolidée) d'un mobile, est centré autour de cette position et définit (à l'aide d'un rayon) le volume dans lequel est située, à une probabilité supérieure à un seuil prédéterminé (par exemple $10^{-7}$/heure de vol ou $10^{-9}$/heure de vol), la position effective correspondante du mobile. Cet espace de probabilité est donc une valeur qui donne une indication sur l'intégrité et la fiabilité de la position associée.

En outre, le dispositif 1 conforme à l'invention est simple à réaliser et ne nécessite pas de beaucoup modifier, structurellement et électriquement, un système, notamment un calculateur, lorsqu'il est implanté dans un tel système.

De plus, la mise en oeuvre de l'invention n'a aucune répercussion sur les systèmes utilisateurs, qui ne doivent donc pas être modifiés lorsqu'ils utilisent la position consolidée Pc déterminée par ledit dispositif 1 et reçue notamment par l'intermédiaire de la liaison 10.

Dans un mode de réalisation préféré, ledit dispositif 1 est dupliqué de sorte que le procédé de consolidation conforme à l'invention est mis en oeuvre dans au moins deux calculateurs différents, ce qui permet de protéger cette mise en oeuvre contre une éventuelle défaillance d'un desdits calculateurs.

Dans un mode de réalisation préféré, pour pouvoir mettre en oeuvre un test de cohérence sur des valeurs de position P1 et P2 quelconques, lesdits moyens 5 comportent :

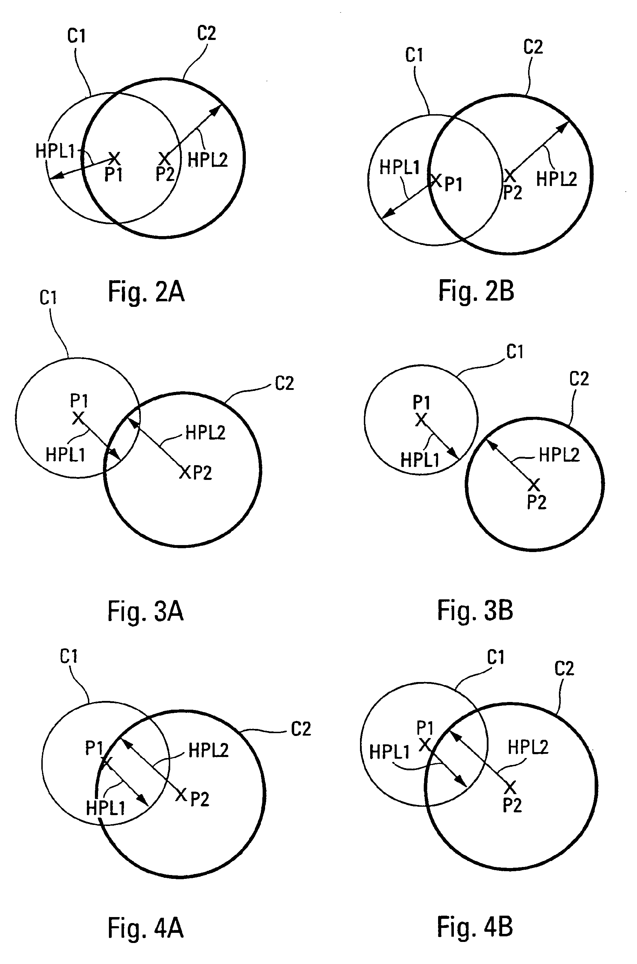

- un élément (non représenté) pour déterminer la valeur de seuil VS qui dépend des rayons HPL1 et HPL2 des espaces de probabilité (illustrés par des cercles C1 et C2 sur les figures 2A à 4B) associés aux deux valeurs de position P1 et P2 testées ; et
- un élément (non représenté) pour calculer la distance P1 P2 (avec P1P2 = |P1-P2|) entre ces deux valeurs de position P1 et P2 et pour la comparer à ladite valeur de seuil VS, de sorte que, si ladite distance P1 P2 est supérieure à cette valeur de seuil VS, un problème de fiabilité (ou de cohérence) existe entre ces deux valeurs de position P1 et P2 testées.

Dans une première variante représentée sur les figures 2A et 2B, ladite valeur de seuil VS correspond à la valeur minimale des rayons HPL1 et HPL2. Dans ce cas :

- dans l'exemple de la figure 2A, comme P1 P2 < VS, les deux valeurs P1 et P2 sont cohérentes entre elles ; et
- dans l'exemple de la figure 2B, comme P1 P2 > VS, les deux valeurs P1 et P2 ne sont pas cohérentes entre elles.

Dans cette première variante, le couple de valeurs de position P1 et P2 est donc cohérent, si chaque cercle C1, C2 illustrant un espace de probabilité englobe le centre de l'autre cercle, de sorte que les deux cercles C1 et C2 sont suffisamment rapprochés l'un de l'autre. En effet, si les deux cercles ne sont pas suffisamment rapprochés l'un de l'autre, une valeur de position P1 ou P2 ou une limite de protection d'intégrité (ou espace de probabilité) HPL1 ou HPL2 associée est erronée.

Dans une deuxième variante représentée sur les figures 3A et 3B, ladite valeur de seuil VS correspond à la somme des rayons HPL1 et HPL2. Dans ce cas :

- dans l'exemple de la figure 3A, comme P1 P2 < VS, les deux valeurs P1 et P2 sont cohérentes entre elles ; et
- dans l'exemple de la figure 3B, comme P1 P2 > VS, les deux valeurs P1 et P2 ne sont pas cohérentes entre elles.

Dans cette deuxième variante, le couple de valeurs de position P1 et P2 est donc cohérent, si les deux cercles C1 et C2 correspondants présentent une intersection, de sorte que les deux cercles C1 et C2 sont suffisamment rapprochés l'un de l'autre. En effet, si les deux cercles ne sont pas suffisamment rapprochés l'un de l'autre, une valeur de position P1 ou P2 ou une limite de protection d'intégrité (ou espace de probabilité) HPL1 ou HPL2 associée est erronée.

En outre, dans une troisième variante représentée sur les figures 4A et 4B, ladite valeur de seuil VS correspond à la valeur maximale des rayons HPL1 et HPL2. Dans ce cas :

- dans l'exemple de la figure 4A, comme P1 P2 < VS, les deux valeurs P1 et P2 sont cohérentes entre elles ; et
- dans l'exemple de la figure 4B, comme P1 P2 > VS, les deux valeurs P1 et P2 ne sont pas cohérentes entre elles.

Dans cette troisième variante, le couple de valeurs de position P1 et P2 est donc cohérent, si au moins un cercle C1, C2 englobe le centre P1, P2 de l'autre cercle, de sorte que les deux cercles C1 et C2 sont suffisamment rapprochés l'un de l'autre. En effet, si les deux cercles ne sont pas suffisamment rapprochés l'un de l'autre, une valeur de position P1 ou P2 ou une limite de protection d'intégrité (ou espace de probabilité) HPL1 ou HPL2 associée est erronée.

On notera que le choix de la valeur de seuil VS joue un rôle important dans les performances du procédé de consolidation mis en oeuvre par le dispositif 1 conforme à l'invention. En effet, le choix d'une valeur de seuil VS trop petite peut conduire à l'élimination d'une valeur de position correcte, tandis que le choix d'une valeur de seuil VS trop grande peut conduire au maintien d'une valeur de position erronée.

En outre, on notera que pour une configuration donnée des deux valeurs de position P1 et P2 et de leurs espaces de probabilité HPL1 et HPL2 associés, le test de cohérence et le choix de la valeur de seuil VS n'ont pas d'impact sur le calcul de la position consolidée Pc, ni sur le calcul de l'espace de probabilité HPLc associé à cette position consolidée Pc. En revanche, le test de cohérence et le choix de la valeur de seuil VS ont un impact direct sur la valeur maximale que pourra atteindre l'espace de probabilité, et donc sur les performances de disponibilité de la position consolidée Pc.

Par ailleurs, pour pouvoir mettre en oeuvre ledit test de performance, lesdits moyens 6 comportent les éléments suivants, intégrés et non représentés spécifiquement :

- un élément pour calculer, pour chaque couple de valeurs de position Pi et Pj considéré, une valeur mathématique associée, et ceci à partir de l'expression mathématique |Pi-Pj| + |HPLi - HPLj|. Dans cette expression mathématique, HPLi et HPLj sont les rayons des espaces de probabilité qui sont associés respectivement aux deux valeurs de position Pi et Pj testées et qui illustrent les intégrités respectives de ces deux valeurs de position Pi et Pj ;
- un élément pour comparer, entre elles, les différentes valeurs mathématiques ainsi calculées ; et
- un élément pour sélectionner, comme couple de valeurs de position présentant la meilleure fiabilité, le couple dont la valeur mathématique associée est la plus faible, en tenant compte des comparaisons réalisées par l'élément précédent.

On notera qu'en l'absence de panne, toutes les valeurs de position prises en compte sont supposées avoir à peu près la même position (correspondant à la position courante effective du mobile). Aussi, une quantité |Pi-Pj| assez importante est bien la conséquence d'une panne concernant la génération de l'une des deux valeurs de position Pi et Pj prises en compte. De plus, en l'absence de panne, toutes les valeurs de position sont supposées avoir à peu près le même espace de probabilité. Aussi, une quantité |HPLi-HPLj| assez importante est bien la conséquence d'une panne concernant la génération de l'un des deux espaces de probabilité HPLi et HPLj.

Par ailleurs, les moyens 8 calculent ladite position consolidée Pc, ainsi que l'espace de probabilité associé (de rayon HPLc), à partir des deux valeurs de position Pi, Pj formant le couple présentant la meilleure fiabilité, ainsi que des espaces de probabilité HPLi, PHLj associés respectivement à ces deux valeurs de position Pi, Pj, informations qui sont reçues desdits moyens 6. Pour ce faire, lesdits moyens 8 comportent les éléments suivants, intégrés et non représentés spécifiquement :

- un élément pour calculer la position consolidée Pc ; et
- un élément pour calculer l'espace de probabilité HPLc qui est associé à cette position consolidée Pc.

Dans le cadre de la présente invention, ces calculs de la position consolidée Pc et de l'espace de probabilité (de rayon HPLc) associé peuvent être réalisés de différentes manières, à partir des valeurs de position Pi et Pj du couple présentant la meilleure fiabilité, qui comprennent des espaces de probabilité de rayons HPLi et HPLj.

Dans un mode de réalisation préféré, la position consolidée Pc et le rayon HPLc de l'espace de probabilité associé vérifient les relations suivantes :

$$
\begin{cases}
Pc = (Pi + Pj)\,/\,2 \\
HPLc = \max(HPLi,\ HPLj) + \left| Pi - Pj \right|/\,2
\end{cases}
$$

dans lesquelles l'expression max(HPLi, HPLj) représente la valeur maximale des deux rayons HPLi et HPLj.

Dans ce mode de réalisation préféré, la position consolidée Pc est donc calculée comme le centre des valeurs de position Pi et Pj formant le couple présentant la meilleure fiabilité, et l'espace de probabilité est calculé comme le plus petit cercle qui est centré sur cette position consolidée Pc et qui contient au moins les deux cercles (de rayons HPLi et HPLj) relatifs aux espaces de probabilité associés audit couple présentant la meilleure fiabilité.

Une première variante de réalisation concernant le calcul de la position consolidée Pc et de l'espace de probabilité HPLc associé est relative à une optimisation de l'intégrité de la position consolidée. On sait que le cercle relatif à HPLc n'est pas nécessairement le plus petit cercle englobant les deux cercles relatifs à HPLi et HPLj. Le principe de cette première variante de réalisation est de minimiser le cercle relatif à HPLc. En fait, le cercle qui est tangent aux deux cercles des deux valeurs de position Pi et Pj est plus petit et offre le même niveau d'intégrité. Cette première variante de réalisation consiste donc d'abord à calculer ce cercle tangent et à le prendre comme cercle de rayon HPLc, puis à déterminer la position consolidée Pc comme le centre de ce cercle de rayon HPLc. Deux cas doivent être considérés dans cette première variante de réalisation.

Un premier cas se présente lorsque :

$$
\left| HPLi - HPLj \right| < \left| Pi - Pj \right|
$$

Dans ce premier cas, la position consolidée Pc correspond au barycentre pondéré des valeurs de positions Pi et Pj, c'est-à-dire Pc=q.Pj+(1-q).Pi.

De plus, q est défini par l'équation suivante :

$$q = [\,1 + (HPLj - HPLi)\, /\, |Pi\!-\!Pj|\,]\, /\, 2$$

On notera que, dans ce premier cas, la valeur |Pi-Pj| ne peut pas être égale à zéro. Dans un tel cas, on obtient donc :

$$\begin{cases} Pc = \left[(Pi + Pj) + (HPLi - HPLj).(\overrightarrow{PjPi} / PiPj)\right]/2 \\ HPLc = \left(HPLi + HPLj + |Pi - Pj|\right)/2 \end{cases}$$

Dans ce premier cas de ladite première variante de réalisation :

- HPLc est plus petit que dans le mode de réalisation préféré précité, ce qui est avantageux ;
- la position consolidée Pc est décalée par rapport au centre des deux valeurs de position Pi et Pj, d'un facteur qui est égal à la moitié de la différence entre HPLi et HPLj, et ceci en direction de la valeur de position qui présente le plus grand espace de probabilité ; et
- si HPLi = HPLj, la position consolidée Pc est le centre des deux valeurs de position Pi et Pj.

En outre, un second cas relatif à ladite première variante de réalisation se présente lorsque :

$$|HPLi - HPLj| \geq |Pi - Pj|$$

Dans ce second cas, on considère qu'un cercle d'une valeur de position est inclus entièrement dans le cercle de l'autre valeur de position. Dans ce cas, la valeur de position présentant le plus grand espace de probabilité peut être choisie comme position consolidée Pc et le cercle le plus grand peut être choisi comme cercle définissant l'espace de probabilité de Pc. Ce cercle englobe bien les deux cercles des deux valeurs de position.

Dans ce second cas, Pc correspond à la position Pi ou Pj qui présente le rayon HPLi ou HPLj le plus élevé [max(HPLi, HPLj)], et HPLc vérifie :

$$HPLc = max(HPLi,\ HPLj).$$

On notera que la transition entre les premier et second cas précités n'entraîne pas de discontinuité, ni pour la position consolidée, ni pour l'espace de probabilité (consolidé) associé.

Par ailleurs, une seconde variante de réalisation relative au calcul de la position consolidée Pc et de l'espace de probabilité associé, réalise une optimisation de ladite position consolidée.

Dans cette seconde variante de réalisation, les moyens 8 déterminent une position consolidée qui appartient toujours à l'intersection des deux espaces de probabilité des deux valeurs de position prises en compte.

Dans cette seconde variante de réalisation, deux cas sont également à considérer.

Dans un premier cas, pour lequel |HPLi-HPLj|<|Pi-Pj|, on obtient :

$$\begin{cases} Pc = \left[(Pi + Pj) + (HPLi - HPLj).(\overrightarrow{PiPj} / PiPj)\right]/2 \\ HPLc = max(HPLi, PHLj) + \left(|HPLi - HPLj| + |Pi - Pj|\right)/2 \end{cases}$$

Dans ce premier cas, la position consolidée Pc est décalée par rapport au centre des deux valeurs de position individuelles du même facteur que dans la première variante de réalisation précitée, mais cette fois en direction de la position qui présente le plus petit espace de probabilité, ce qui est favorable.

En outre, dans un second cas, pour lequel |HPLi-HPLj|≥|Pi-Pj|, Pc correspond à la position Pi ou Pj qui présente le rayon HPLi ou HPLj le plus faible, et HPLc vérifie :

$$HPLc = max\,(HPLi,\ HPLj) + \left|Pi - Pj\right|$$

Bien que non exclusivement, le dispositif 1 conforme à l'invention s'applique plus particulièrement à un aéronef, et en particulier à un avion de transport. Dans ce cas lesdits moyens de génération de position 3A, 3B et 3C peuvent être différents systèmes de positionnement de l'aéronef, et en particulier un système de référence inertielle de type IR ("Inertial Reference" en anglais), un système de référence de données air de type ADR ("Air Data Reference" en anglais), et/ou des moyens GNSS qui font partie d'un système de positionnement par satellites de type GNSS ("Global Navigation Satellite System" en anglais).

Dans un mode de réalisation particulier, lesdits moyens 3A à 3C correspondent à des systèmes IR qui calculent chacun, de façon usuelle, comme valeur de position, une position hybride à partir d'informations obtenues desdits systèmes IR et ADR et desdits moyens GNSS.

En outre, dans un mode de réalisation préféré, lesdits moyens 3A, 3B et 3C sont indépendants les uns des autres et ne comportent pas d'éléments communs de sorte que les valeurs de position engendrées respectivement par ces moyens 3A à 3C sont également indépendantes les unes des autres. Dans ce cas, lesdits moyens 6 réalisent un test de performance de type précité, en tenant compte de tous les couples de valeurs de position indépendantes, qui ont été considérés comme cohérents par lesdits moyens 5.

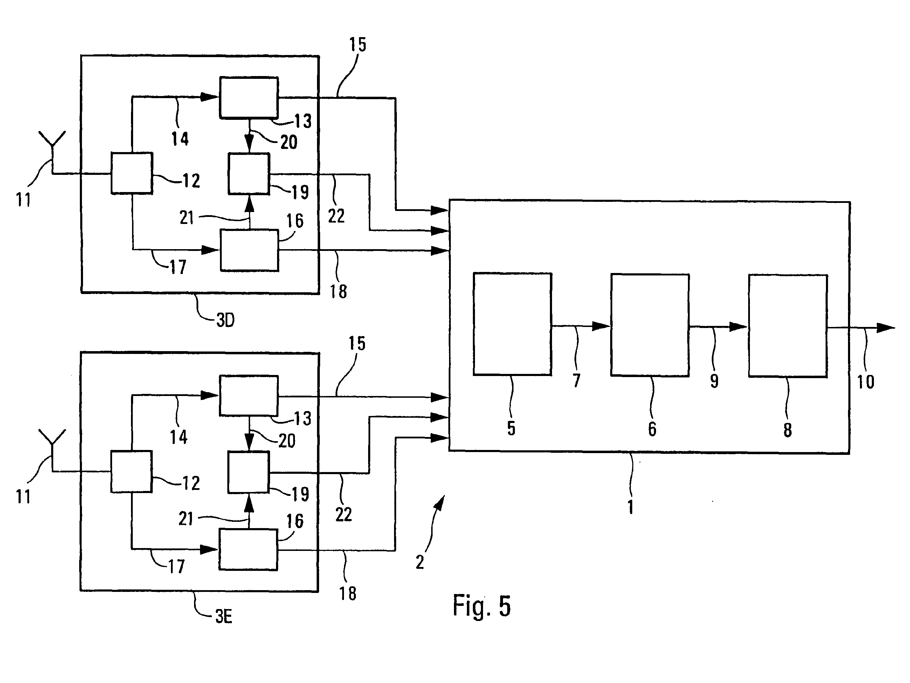

Par ailleurs, dans un autre mode de réalisation représenté sur la figure 5, chacun desdits moyens de génération de position 3D et 3E génère deux valeurs de position qui sont dépendantes l'une de l'autre, c'est-à-dire qui sont engendrées en utilisant au moins un élément matériel commun.

Dans un mode de réalisation particulier, chacun desdits moyens 3D et 3E représente une unité qui est associée à un système de positionnement par satellites, de préférence un système de navigation global par satellites de type GNSS qui englobe l'ensemble des systèmes de navigation par satellites (GPS, GALILEO, ...) existants. Dans ce cas, chacune de ces unités 3D et 3E comporte :

- un récepteur 12 usuel qui est muni d'une antenne 11, et qui permet notamment de recevoir des informations de satellites faisant partie dudit système de positionnement par satellites ;
- un élément de calcul 13 (ou chaîne de calcul) qui est relié par l'intermédiaire d'une liaison 14 audit récepteur 12 et qui est formé de manière à déterminer, de façon usuelle, à partir des informations reçues, une première valeur de position, qu'il transmet par l'intermédiaire d'une liaison 15 au dispositif 1 ; et
- un moyen de calcul 16 (ou chaîne de calcul) qui est semblable au moyen de calcul 13, qui est relié par l'intermédiaire d'une liaison 17 audit récepteur 12, et qui est également formé de manière à déterminer, de façon usuelle, à partir des informations reçues, une seconde valeur de position, qu'il transmet par l'intermédiaire d'une liaison 18 audit dispositif 1.

Les deux valeurs de position relatives à une même position du mobile qui sont transmises respectivement par les liaisons 15 et 18 d'une même unité 3D, 3E sont donc dépendantes, puisque l'unité 3D, 3E utilise un récepteur commun 12 et une antenne commune 11 pour engendrer ces deux valeurs de position.

Dans le mode de réalisation particulier représenté sur la figure 5, chacune desdites unités 3D et 3E comporte, de plus, des moyens 19 qui sont reliés respectivement par l'intermédiaire de liaisons 20 et 21 auxdits éléments de calcul 13 et 16 et qui sont formés de manière à réaliser des tests de correspondance entre deux valeurs de position déterminées simultanément par ces moyens de calcul 13 et 16.

A cet effet, lesdits moyens 19 comparent entre elles, deux à deux, les valeurs de position qui dépendent l'une de l'autre, c'est-à-dire les valeurs de position qui sont engendrées respectivement par lesdits éléments de calcul 13 et 16 pour une même position courante du mobile. Pour ce faire, lesdits moyens 19 calculent la différence entre les valeurs de position dépendantes d'un couple donné et comparent cette différence à un seuil. Ils considèrent qu'un couple de valeurs de position dépendantes ne présente aucune incohérence et est dit "en accord", si la différence entre ces deux valeurs de position dépendantes est inférieure audit seuil. Lesdits moyens 19 transmettent ensuite les résultats de ces tests de correspondance, par l'intermédiaire d'une liaison 22, audit dispositif 1 qui en tient compte (notamment par l'intermédiaire des moyens 6) dans le calcul de Pc et HPLc.

Dans ce cas, dans un mode de réalisation préféré, lesdits moyens 6 prennent en compte tous les couples de valeur qui sont considérés comme cohérents par lesdits moyens 5. De plus, si parmi ces couples :

- il existe au moins deux couples de valeurs de position indépendantes, les moyens 6 réalisent, à l'aide de ces (au moins deux) couples, un test de performance de type précité de manière à obtenir le couple présentant la meilleure fiabilité. Dans l'exemple de la figure 2, deux valeurs de position sont indépendantes lorsque l'un est engendré par les moyens 3D et l'autre est engendré par les moyens 3E, lesdits moyens 3D et 3E n'ayant pas d'élément matériel commun ;
- il existe un seul couple de valeurs de position indépendantes, les moyens 6 considèrent ce couple comme le couple présentant la meilleure fiabilité ; et
- il n'existe aucun couple de valeurs de position indépendantes, mais il existe des couples de valeurs de position dépendantes (c'est-à-dire des valeurs de position engendrées soit par les moyens 3D, soit par les moyens 3E), les moyens 6 considèrent tous ces couples de valeurs de position dépendantes (ainsi que les résultats des tests de correspondances relatifs à ces couples, qui ont été mis en oeuvre par les moyens 19).

Dans ce cas, si parmi ces couples (de valeurs de position dépendantes) :

- il existe au moins deux couples (de valeurs de position dépendantes) qui sont considérés en accord par les moyens 19, lesdits moyens 6 réalisent, à l'aide de ces (au moins deux) couples, un test de performance de type précité de manière à obtenir le couple présentant la meilleure fiabilité ;
- il existe un seul couple (de valeurs de position dépendantes) en accord, les moyens 6 considèrent ce couple comme le couple présentant la meilleure fiabilité ; et
- il n'existe aucun couple de valeurs de position dépendantes en accord, les moyens 6 considèrent qu'aucun couple présentant la meilleure fiabilité ne peut être déterminé. Dans ce cas, aucune position consolidée Pc ne peut être calculée.

Par conséquent, dans ce mode de réalisation préféré, lorsque le dispositif 1 traite à la fois des valeurs de position dépendantes et des valeurs de position indépendantes, lesdits moyens 6 prennent en compte en priorité lesdites valeurs de position indépendantes.

On notera que le reste des éléments du système 2 (et notamment du dispositif 1) de la figure 5 est semblable aux éléments présentant les mêmes références du système 2 de la figure 1. Aussi, il est renvoyé à la description correspondante concernant la figure 1 pour connaître la réalisation et le mode de fonctionnement de ces éléments semblables (et notamment des moyens 5 et 8).

Par ailleurs, dans une variante de réalisation simplifiée, en présence de valeurs de position dépendantes, lesdits moyens 6 peuvent également simplement réaliser un test de performance de type précité, en tenant compte de la même manière de tous les couples cohérents de valeurs de position dépendantes et indépendantes. Cette variante de réalisation simplifiée évite notamment d'avoir à prévoir des moyens 1 9 pour mettre en oeuvre des tests de correspondance.

**Revendications**

1. Procédé pour déterminer une position consolidée d'un mobile, en particulier d'un aéronef, à partir d'une pluralité de valeurs de position générées par une pluralité de moyens de génération de position (3A, 3B, 3C) pour la position courante dudit mobile,
   **caractérisé en ce que** :

   a) on réalise des tests de cohérence pour vérifier l'a cohérence de tous les couples de valeurs de position, qui sont formés à partir desdites valeurs de position, un test de cohérence appliqué à un couple de valeurs de position consistant à comparer à une valeur de seuil la distance entre les deux valeurs de position de ce couple et à considérer ce couple comme cohérent si et seulement si cette distance est inférieure ou égale à cette valeur de seuil ;

   b) on identifie, parmi les différents couples qui sont considérés comme cohérents à l'étape a), un couple de valeurs de position présentant la meilleure fiabilité, en mettant en oeuvre au moins un test de performance, ledit test de performance consistant :

   - à calculer, pour chaque couple de valeurs de position $P_i$ et $P_j$ considéré, une valeur mathématique associée, à partir de l'expression $|P_i-P_j|+|HPL_i-HPL_j|$, dans laquelle $HPL_i$ et $HPL_j$ sont les rayons d'espaces de probabilité qui sont associés respectivement aux deux valeurs de position $P_i$ et $P_j$ testées et qui illustrent les intégrités respectives de ces deux valeurs de position $P_i$ et $P_j$ ;
   - à comparer entre elles les différentes valeurs mathématiques ainsi calculées ; et

- à sélectionner, comme couple de valeurs de position présentant la meilleure fiabilité, le couple dont la valeur mathématique associée est la plus faible ; et

c) on calcule, à partir dudit couple de valeurs de position présentant la meilleure fiabilité, ladite position consolidée du mobile, ainsi qu'un espace de probabilité qui est associé à cette valeur de position consolidée et qui illustre son intégrité.

2. Procédé selon la revendication 1,
**caractérisé en ce qu'**à l'étape a), la valeur de seuil utilisée dans un test de cohérence appliqué à deux valeurs de position (P1, P2), est calculée à partir des rayons (HPL1, HPL2) de deux espaces de probabilité qui sont associés respectivement à ces deux valeurs de position (P1, P2) testées et qui illustrent les intégrités respectives de ces deux valeurs de position (P1, P2).

3. Procédé selon l'une des revendications 1 et 2,
**caractérisé en ce qu'**à l'étape c), on calcule ladite position consolidée, ainsi que l'espace de probabilité associé, à partir des deux valeurs de position formant le couple présentant la meilleure fiabilité, ainsi que des espaces de probabilité associés respectivement à ces deux valeurs de position.

4. Procédé selon l'une quelconque des revendications 1 à 3,
**caractérisé en ce que** lesdites valeurs de position sont indépendantes les unes des autres, et **en ce qu'**à l'étape b), on réalise un test de performance en tenant compte de tous les couples cohérents de valeurs de position indépendantes.

5. Procédé selon l'une quelconque des revendications 1 à 3,
**caractérisé en ce qu'**au moins certaines desdites valeurs de position sont dépendantes les unes des autres, et **en ce qu'**à l'étape b), on réalise un test de performance en tenant compte de tous les couples cohérents de valeurs de position dépendantes et indépendantes.

6. Procédé selon l'une quelconque des revendications 1 à 3,
**caractérisé en ce qu'**au moins certaines desdites valeurs de position sont dépendantes les unes des autres, et **en ce qu'**entre les étapes a) et b), on réalise une étape intermédiaire dans laquelle :

- on réalise des tests de correspondance consistant à comparer entre elles, deux à deux, toutes les valeurs de position qui dépendent l'une de l'autre, en calculant la différence entre ces valeurs de position et en comparant cette différence à un seuil ; et
- on considère qu'un couple de valeurs de position dépendantes est en accord, si la différence entre ces valeurs de position est inférieure audit seuil.

7. Procédé selon la revendication 6,
**caractérisé en ce qu'**à l'étape b), on prend en compte tous les couples de valeurs de position qui sont considérés comme cohérents à l'étape a), et si parmi ces couples :

- il existe au moins deux couplés de valeurs de position indépendantes, on réalise, à l'aide de ces couples, un test de performance de manière à obtenir le couple présentant la meilleure fiabilité ;
- il existe un seul couple de valeurs de position indépendantes, on considère ce couple comme le couple présentant la meilleure fiabilité ; et
- il n'existe aucun couple de valeurs de position indépendantes, mais il existe des couples de valeurs de position dépendantes, on considère tous ces couples de valeurs de position dépendantes et si parmi ces couples :

• il existe au moins deux couples de valeurs de position dépendantes en accord, on réalise, à l'aide de ces couples, un test de performance de manière à obtenir le couple présentant la meilleure fiabilité ;
• il existe un seul couple de valeurs de position dépendantes en accord, on considère ce couple comme le couple présentant la meilleure fiabilité ; et
• il n'existe aucun couple de valeurs de position dépendantes en accord, on n'obtient pas de couple présentant la meilleure fiabilité.

8. Dispositif pour déterminer une position consolidée d'un mobile, en particulier d'un aéronef, à partir d'une pluralité de valeurs de position générées par une pluralité de moyens de génération de position (3A, 38, 3C) pour la position courante dudit mobile,
**caractérisé en ce qu'**il comporte :

- des premiers moyens (5) pour réaliser des tests de cohérence destinés à vérifier la cohérence de tous les couples de valeurs de position, qui sont formés à partir desdites valeurs de position, un test de cohérence réalisé par lesdits premiers moyens (5) et appliqué à un couple de valeurs de position consistant à comparer à une valeur de seuil la distance entre les deux valeurs de position de ce couple et à considérer ce couple comme cohérent si et seulement si cette distance est inférieure ou égale à cette valeur de seuil ;
- des deuxièmes moyens (6) pour identifier, parmi les différents couples qui sont considérés comme cohérents par lesdits premiers moyens (5), un couple de valeurs de position présentant la meilleure fiabilité, en mettant en oeuvre au moins un test de performance, ledit test de performance consistant :

  • à calculer, pour chaque couple de valeurs de position Pi et Pj considéré, une valeur mathématique associée, à partir de l'expression |Pi-Pj|+|HPLi-HPLj|, dans laquelle HPLi et HPLj sont les rayons d'espaces de probabilité qui sont associés respectivement aux deux valeurs de position Pi et Pj testées et qui illustrent les intégrités respectives de ces deux valeurs de position Pi et Pj ;
  • à comparer entre elles les différentes valeurs mathématiques ainsi calculées ; et
  • à sélectionner, comme couple de valeurs de position présentant la meilleure fiabilité, le couple dont la valeur mathématique associée est la plus faible ; et

- des troisièmes moyens (8) pour calculer, à partir dudit couple de valeurs de position présentant la meilleure fiabilité, ladite position consolidée du mobile, ainsi qu'un espace de probabilité qui est associé à cette valeur de position consolidée et qui illustre son intégrité.

9. Système de génération d'une position consolidée d'un mobile, en particulier d'un aéronef, **caractérisé en ce qu'**il comporte :

- une pluralité de moyens de génération de position (3A, 3B, 3C ; 3D, 3E), qui sont susceptibles d'engendrer des valeurs de position, dont chacune représente la position courante dudit mobile ; et
- un dispositif (1) tel que celui spécifié sous la revendication 8, pour déterminer une position consolidée à partir des valeurs de position engendrées par lesdits moyens de génération de position (3A, 3B, 3C ; 3D, 3E).

**Claims**

1. A method for determining a consolidated position of a traveling object, particularly an aircraft, on the basis of a plurality of position values generated by a plurality of position generating means (3A, 3B, 3C) for the current position of said traveling object, **characterized in that**:

a) consistency tests are carried out to verify the consistency of all the pairs of position values, which are formed on the basis of said position values, a consistency test applied to a pair of position values consisting in comparing with a threshold value the distance between the two position values of this pair and in considering this pair to be consistent if and only if this distance is less than or equal to this threshold value;

b) from among the various pairs which are considered to be consistent in step a), a pair of position values exhibiting the best reliability is identified by implementing at least one performance test, said performance test consisting:

- in calculating, for each pair of position values Pi and Pj considered, an associated mathematical value, on the basis of the expression |Pi-Pj| + |HPLi-HPL|, in which HPLi and HPLj are the radii of probability spaces which are associated respectively with the two position values Pi and Pj tested and which illustrate the respective integrities of these two position values Pi and Pj;
- in inter-comparing the various mathematical values thus calculated; and
- in selecting, as pair of position values exhibiting the best reliability, the pair whose associated mathematical value is the lowest; and

c) said consolidated position of the traveling object, as well as a probability space which is associated with this consolidated position value and which illustrates its integrity, are calculated on the basis of said pair of position values exhibiting the best reliability.

**2.** The method as claimed in claim 1, **characterized in that** in step a), the threshold value used in a consistency test applied to two position values (P1, P2), is calculated on the basis of the radii (HPL1, HPL2) of two probability spaces which are associated respectively with these two tested position values (P1, P2) and which illustrate the respective integrities of these two position values (P1, P2).

**3.** The method as claimed in one of claims 1 and 2, **characterized in that** in step c), said consolidated position, as well as the associated probability space, are calculated on the basis of the two position values forming the pair exhibiting the best reliability, as well as of the probability spaces associated respectively with these two position values.

**4.** The method as claimed in any one of claims 1 to 3, **characterized in that** said position values are independent of one another, and **in that** in step b), a performance test is carried out by taking account of all the consistent pairs of independent position values.

**5.** The method as claimed in any one of claims 1 to 3, **characterized in that** at least some of said position values are dependent on one another, and **in that** in step b), a performance test is carried out by taking account of all the consistent pairs of dependent and independent position values.

**6.** The method as claimed in any one of claims 1 to 3, **characterized in that** at least some of said position values are dependent on one another, and **in that** between steps a) and b), an intermediate step is carried out in which:

- correspondence tests are carried out consisting in inter-comparing, pairwise, all the position values which depend on one another, by calculating the difference between these position values and by comparing this difference with a threshold; and
- a pair of dependent position values is considered to be in harmony, if the difference between these position values is less than said threshold.

**7.** The method as claimed in claim 6, **characterized in that** in step b), all the pairs of position values which are considered to be consistent in step a) are taken into account, and if from among these pairs:

- there exist at least two pairs of independent position values, a performance test is carried out, with the aid of these pairs, so as to obtain the pair exhibiting the best reliability;
- there exists a single pair of independent position values, this pair is considered to be the pair exhibiting the best reliability; and
- there exists no pair of independent position values, but there exist pairs of dependent position values, all these pairs of dependent position values are considered and if from among these pairs:

. there exist at least two pairs of dependent position values in harmony, a performance test is carried out, with the aid of these pairs, so as to obtain the pair exhibiting the best reliability;
. there exists a single pair of dependent position values in harmony, this pair is considered to be the pair exhibiting the best reliability; and
. there exists no pair of dependent position values in harmony, no pair exhibiting the best reliability is obtained.

**8.** A device for determining a consolidated position of a traveling object, particularly an aircraft, on the basis of a plurality of position values generated by a plurality of position generating means (3A, 3B, 3C) current position of said traveling object, **characterized in that** it comprises:

- first means (5) for carrying out consistency tests intended to verify the consistency of all the pairs of position values, which are formed on the basis of said position values, a consistency test carried out by said first means (5) and applied to a pair of position values consisting in comparing with a threshold value the distance between the two position values of this pair and in considering this pair to be consistent if and only if this distance is less than or equal to this threshold value;
- second means (6) for identifying, from among the various pairs which are considered to be consistent by said first means (5), a pair of position values exhibiting the best reliability, by implementing at least one performance test, said performance test consisting:

. in calculating, for each pair of position values Pi and Pj considered, an associated mathematical value, on the basis of the expression |Pi-Pj|+ |HPLi-HPL|, in which HPLi and HPLj are the radii of probability spaces which are associated respectively with the two position values Pi and Pj tested and which illustrate the respective integrities of these two position values Pi and Pj;

. in inter-comparing the various mathematical values thus calculated; and

. in selecting, as pair of position values exhibiting the best reliability, the pair whose associated mathematical value is the lowest; and

- third means (8) for calculating, on the basis of said pair of position values exhibiting the best reliability, said consolidated position of the traveling object, as well as a probability space which is associated with this consolidated position value and which illustrates its integrity.

9. A system for generating a consolidated position of a traveling object, particularly an aircraft, **characterized in that** it comprises:

- a plurality of position generating means (3A, 3B, 3C; 3D, 3E), which are able to produce position values, each of which represents the current position of said traveling object; and

- a device (1) such as that specified under claim 8, for determining a consolidated position on the basis of the position Values produced by said position generating means (3A, 3B, 3C; 3D, 3E).

**Patentansprüche**

1. Verfahren zur Bestimmung einer konsolidierten Position eines beweglichen Körpers, insbesondere eines Flugzeugs, ausgehend von einer Vielzahl von Positionswerten, erzeugt von einer Vielzahl von Mitteln zur Erzeugung der Position (3A, 3B, 3C) für die gegenwärtige Position des beweglichen Körpers,

**dadurch gekennzeichnet, dass**

a) Kohärenztests durchgeführt werden, um die Kohärenz aller Paare von Positionswerten zu überprüfen, die ausgehend von den Positionswerten gebildet werden, wobei ein Kohärenztest, angewendet auf ein Paar von Positionswerten, aus dem Vergleich des Abstands zwischen den zwei Positionswerten dieses Paars mit einem Schwellenwerte und der Erachtung dieses Paars als kohärent besteht, wenn und nur wenn dieser Abstand geringer als oder gleich diesem Schwellenwert ist;

b) unter den verschiedenen Paaren, die in Schritt a) als kohärent erachtet werden, ein Paar von Positionswerten identifiziert wird, das die beste Zuverlässigkeit aufweist, indem mindestens ein Leistungstest durchgeführt wird, wobei der Leistungstest aus Folgendem besteht:

- der Berechnung, für jedes betrachtete Paar, von Positionswerten Pi und Pj, eines verknüpften mathematischen Werts, ausgehend vom Ausdruck $|Pi - Pj| + |HPLi - HPLj|$, wobei HPLi und HPLj die Radien der Wahrscheinlichkeitscluster sind, die jeweils mit den zwei getesteten Positionswerten Pi und Pj verknüpft sind, und die die jeweiligen Integritäten dieser zwei Positionswerte Pi und Pj darstellen;

- dem Vergleich der verschiedenen so berechneten mathematischen Werte untereinander; und

- der Auswahl, als Paar von Positionswerten, das die beste Zuverlässigkeit aufweist, desjenigen Paars, dessen verknüpfter mathematische Wert am geringsten ist; und

c) ausgehend von dem Paar von Positionswerten, das die beste Zuverlässigkeit aufweist, die konsolidierte Position des beweglichen Körpers berechnet wird, ebenso wie ein Wahrscheinlichkeitscluster, das mit diesem konsolidierten Positionswert verknüpft ist, und das seine Integrität darstellt.

2. Verfahren nach Anspruch 1,
**dadurch gekennzeichnet, dass** in Schritt a) der Schwellenwert, verwendet in einem Kohärenztest, angewendet auf zwei Positionswerte (P1, P2), ausgehend von den Radien (HPL1, HPL2) von zwei Wahrscheinlichkeitsclustern, die jeweils mit diesen zwei getesteten Positionswerten (P1, P2) verknüpft sind, und die die jeweiligen Integritäten dieser zwei Positionswerte (P1, P2) darstellen, berechnet wird.

3. Verfahren nach einem der Ansprüche 1 und 2,
**dadurch gekennzeichnet, dass** in Schritt c) die konsolidierte Position, ebenso wie das verknüpfte Wahrscheinlichkeitscluster, ausgehend von den zwei Positionswerten berechnet wird, die das Paar bilden, das die beste Zuverlässigkeit aufweist, ebenso wie Wahrscheinlichkeitscluster, die jeweils mit diesen zwei Positionswerten verknüpft sind.

4. Verfahren nach einem der Ansprüche 1 bis 3,
**dadurch gekennzeichnet, dass** die Positionswerte voneinander unabhängig sind, und **dadurch**, dass in Schritt b) ein Leistungstest durchgeführt wird, indem alle kohärenten Paare von unabhängigen Positionswerten berücksichtigt werden.

5. Verfahren nach einem der Ansprüche 1 bis 3,
**dadurch gekennzeichnet, dass** mindestens bestimmte der Positionswerte voneinander abhängig sind, und **dadurch**, dass in Schritt b) ein Leistungstest durchgeführt wird, in dem alle kohärenten Paare von abhängigen und unabhängigen Positionswerten berücksichtigt werden.

6. Verfahren nach einem der Ansprüche 1 bis 3,
**dadurch gekennzeichnet, dass** mindestens bestimmte der Positionswerte voneinander abhängig sind, und **dadurch**, dass zwischen den Schritten a) und b) ein Zwischenschritt durchgeführt wird, in dem:

- Korrespondenztests durchgeführt werden, bestehend aus dem paarweisen Vergleich aller Positionswerte untereinander, die voneinander abhängen, indem der Unterschied zwischen diesen Positionswerten berechnet und dieser Unterschied mit einer Schwelle verglichen wird; und
- ein Wertepaar von abhängigen Positionswerten als übereinstimmend erachtet wird, wenn der Unterschied zwischen diesen Positionswerten kleiner als die Schwelle ist.

7. Verfahren nach Anspruch 6,
**dadurch gekennzeichnet, dass** in Schritt b) alle Paare von Positionswerten berücksichtigt werden, die in Schritt a) als kohärent erachtet werden, und wenn zwischen diesen Paaren:

- mindestens zwei Paare von unabhängigen Positionswerten vorhanden sind, wird mit Hilfe dieser Paare ein Leistungstest durchgeführt, um das Paar zu erhalten, das die beste Zuverlässigkeit aufweist;
- ein einziges Paar von unabhängigen Positionswerten vorhanden ist, wird dieses Paar als das Paar erachtet, das die beste Zuverlässigkeit aufweist; und
- kein Paar von unabhängigen Positionswerten vorhanden ist, aber Paare von abhängigen Positionswerten vorhanden sind, werden alle diese Paare von abhängigen Positionswerten in Betracht gezogen, und wenn zwischen diesen Paaren:

- mindestens zwei Paare von abhängigen Positionswerten vorhanden sind, die übereinstimmen, wird mit Hilfe dieser Paare ein Leistungstest durchgeführt, um das Paar zu erhalten, das die beste Zuverlässigkeit aufweist;
- ein einziges Paar von abhängigen Positionswerten vorhanden ist, die übereinstimmen, wird dieses Paar als das Paar erachtet, das die beste Zuverlässigkeit aufweist; und
- kein Paar von abhängigen Positionswerten vorhanden ist, die übereinstimmen, wird kein Paar erhalten, das die beste Zuverlässigkeit aufweist.

8. Vorrichtung zur Bestimmung einer konsolidierten Position eines beweglichen Körpers, insbesondere eines Flugzeugs, ausgehend von einer Vielzahl von Positionswerten, erzeugt von einer Vielzahl von Mitteln zur Erzeugung der Position (2A, 3B, 3C) für die gegenwärtige Position des beweglichen Körpers,
**dadurch gekennzeichnet, dass** sie Folgendes umfasst:

- erste Mittel (5), um Kohärenztests durchzuführen, dazu bestimmt, die Kohärenz aller Paare von Positionswerten zu überprüfen, die ausgehend von den Positionswerten gebildet werden, wobei einen Kohärenztest, durchgeführt von den ersten Mitteln (5) und angewendet auf ein Paar von Positionswerten, aus dem Vergleich des Abstands zwischen den zwei Positionswerten dieses Paars mit einem Schwellenwert und der Erachtung dieses Paares als kohärent besteht, wenn und nur wenn dieser Abstand geringer als oder gleich diesem Schwellenwert ist;
- zweite Mittel (6), um unter den verschiedenen Paaren, die von den ersten Mitteln (5) als kohärent erachtet werden, ein Paar von Positionswerten zu identifizieren, das die beste Zuverlässigkeit aufweist, indem mindestens ein Leistungstest durchgeführt wird, wobei der Leistungstest aus Folgendem besteht:

- der Berechnung, für jedes berücksichtigte Paar von Positionswerten $P_i$ und $P_j$, eines verknüpften mathematischen Werts, ausgehend vom Ausdruck $|P_i - P_j| + |HPL_i - HPL_j|$, wobei $HPL_i$ und $HPL_j$ die Radien der Wahrscheinlichkeitscluster sind, die jeweils mit den zwei getesteten Positionswerten $P_i$ und $P_j$ verknüpft

sind, und die die jeweiligen Integritäten dieser zwei Positionswerte Pi und Pj darstellen;
- dem Vergleich der verschiedenen so berechneten mathematischen Werte untereinander; und
- der Auswahl, als Paar von Positionswerten, das die beste Zuverlässigkeit aufweist, desjenigen Paars, dessen verknüpfter mathematische Wert am geringsten ist; und

- dritten Mitteln (8), um, ausgehend von dem Paar von Positionswerten, das die beste Zuverlässigkeit aufweist, die konsolidierte Position des beweglichen Körpers zu berechnen, ebenso wie eine Wahrscheinlichkeitscluster, das mit diesem konsolidierten Positionswert verknüpft wird, und das seine Integrität darstellt.

9. System zur Erzeugung einer konsolidierten Position eines beweglichen Körpers, insbesondere eines Flugzeugs, **dadurch gekennzeichnet, dass** es Folgendes umfasst:

- eine Vielzahl von Mitteln zur Erzeugung der Position (3A, 3B, 3C; 3D, 3E), die dazu geeignet sind, Positionswerte zu erzeugen, von denen jeder die gegenwärtige Position des beweglichen Körpers darstellt; und
- eine Vorrichtung (1) wie diejenige, die in Anspruch 8 spezifiziert wurde, um eine konsolidierte Position ausgehend von den Positionswerten zu bestimmen, erzeugt durch die Mittel zur Erzeugung der Position (3A, 3B, 3C; 3D, 3E).

Fig. 1

EP 2 160 664 B1

Fig. 2A

Fig. 2B

Fig. 3A

Fig. 3B

Fig. 4A

Fig. 4B

Fig. 5

EP 2 160 664 B1

**EP 2 160 664 B1**

## RÉFÉRENCES CITÉES DANS LA DESCRIPTION

**Documents brevets cités dans la description**

- US 6502042 B
- US 5906655 A
- US 2005125141 A
- US 20031023534 A